(19) Europäisches Patentamt
European Patent Office
Office européen des brevets

(11) **EP 3 919 444 A2**

(12) **EUROPEAN PATENT APPLICATION**

(43) Date of publication:
08.12.2021 Bulletin 2021/49

(51) Int Cl.:
*C01G 53/00* (2006.01)          *H01M 4/525* (2010.01)
*H01M 4/36* (2006.01)

(21) Application number: 21173265.6

(22) Date of filing: 11.05.2021

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 04.06.2020 KR 20200067817

(71) Applicant: SK Innovation Co., Ltd.
**Seoul 03188 (KR)**

(72) Inventors:
• **LEE, Sang Han**
**34124 Daejeon (KR)**
• **KANG, Min Gu**
**34124 Daejeon (KR)**
• **YOON, Jeong Bae**
**34124 Daejeon (KR)**
• **CHO, Yong Hyun**
**34124 Daejeon (KR)**

(74) Representative: **Stolmár & Partner
Patentanwälte PartG mbB
Blumenstraße 17
80331 München (DE)**

(54) **CATHODE ACTIVE MATERIAL FOR LITHIUM SECONDARY BATTERY**

(57)     A lithium secondary battery includes a cathode including a cathode active material including a lithium-transition metal composite oxide particle having a crystal grain size of greater than 500 nm measured through X-ray diffraction (XRD) analysis, and an anode disposed to face the cathode. The present invention provides a lithium secondary battery having improved life-span characteristics while suppressing gas generation due to crack of the particles by controlling the crystal grain size of the lithium-transition metal composite oxide particles.

EP 3 919 444 A2

**Description**

[BACKGROUND OF THE INVENTION]

1. Field of the Invention

The present invention relates to a lithium secondary battery, and more specifically, to a lithium secondary battery including a lithium-transition metal composite oxide particle as a cathode active material.

2. Description of the Related Art

A secondary battery is a battery which can be repeatedly charged and discharged. With rapid progress of information and communication, and display industries, the secondary battery has been widely applied to various portable telecommunication electronic devices such as a camcorder, a mobile phone, a laptop computer as a power source thereof. Recently, a battery pack including the secondary battery has also been developed and applied to an eco-friendly automobile such as a hybrid vehicle as a power source thereof.

Examples of the secondary battery may include a lithium secondary battery, a nickel-cadmium battery, a nickel-hydrogen battery and the like. Among them, the lithium secondary battery has a high operating voltage and a high energy density per unit weight, and is advantageous in terms of a charging speed and light weight. In this regard, the lithium secondary battery has been actively developed and applied as a power source.

For example, the lithium secondary battery may include: an electrode assembly including a cathode, an anode, and a separation membrane (separator); and an electrolyte in which the electrode assembly is impregnated. The lithium secondary battery may further include, for example, a pouch type outer case in which the electrode assembly and the electrolyte are housed.

In the lithium secondary battery, a lithium metal oxide is used as a cathode active material, and it is preferable to have a high capacity, a high output, and high life-span characteristics. However, when designing the lithium metal oxide for a high output composition, thermal and mechanical stabilities may be deteriorated, and thereby life-span characteristics and operational stability of the lithium secondary battery may be deteriorated.

For example, Korean Patent Laid-Open Publication No. 10-2017-0093085 discloses a cathode active material including a transition metal compound and an ion adsorbing binder, but there is a limitation in securing sufficient life-span characteristics and stability.

[Prior Art Document]

[Patent Document]

Korean Patent Laid-Open Publication No. 10-2017-0093085

[SUMMARY OF THE INVENTION]

It is an object of the present invention to provide a lithium secondary battery having excellent operational stability and reliability.

To achieve the above object, according to an aspect of the present invention, there is provided a cathode active material for a lithium secondary battery including: a lithium-transition metal composite oxide particle having a crystal grain size of greater than 500 nm measured through X-ray diffraction (XRD) analysis.

In some embodiments, the crystal grain size may be measured through Equation 1 below:

[Equation 1]

$$L = \frac{0.9\lambda}{\beta cos\theta}$$

(In Equation 1, L represents the crystal grain size, $\lambda$ represents an X-ray wavelength, $\beta$ represents a full width at half maximum (FWHM) of a peak of (003) plane, and $\theta$ represents an angle of diffraction).

In some embodiments, the lithium-transition metal composite oxide particle may have a crystal grain size of 600 to 1100 nm.

In some embodiments, the lithium-transition metal composite oxide particle may include a first lithium-transition metal composite oxide particle having a crystal grain size of greater than 500 nm measured through the XRD analysis and a second lithium-transition metal composite oxide particle in a form of a secondary particle.

In some embodiments, the first lithium-transition metal composite oxide particle may include a form of a single particle having a single crystal or polycrystalline structure in crystallography.

In some embodiments, the crystal grain size of the second lithium-transition metal composite oxide particle measured through the XRD analysis may be 500 nm or less.

In some embodiments, a weight ratio of the first lithium-transition metal composite oxide particle and the second lithium-transition metal composite oxide particle may be 3:7 to 7:3 in the cathode active material.

In some embodiments, a particle diameter ($D_{50}$) of the second lithium-transition metal composite oxide particle may be larger than a particle diameter of the first lithium-transition metal composite oxide particle.

In some embodiments, the lithium-transition metal composite oxide particle may have a composition represented by the following formula (1):

$$[\text{Formula 1}] \qquad Li_xNi_{1-y}M_yO_{2+z}$$

(In Formula 1, x and y are in a range of $0.9 \leq x \leq 1.1$, and $0 \leq y \leq 0.7$, z is in a range of $-0.1 \leq z \leq 0.1$, and M is at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr).

In some embodiments, a molar ratio of Ni in the Formula 1 may be 0.8 or more.

According to another aspect of the present invention, there is provided a lithium secondary battery including: a cathode including the above cathode active material for a lithium secondary battery; and an anode disposed to face the cathode.

The lithium secondary battery according to the above-described exemplary embodiments may include a lithium-transition metal composite oxide particle having a crystal grain size of greater than 500 nm as a cathode active material. Thereby, as a contact area between the particles is reduced, a strength of the particles may be increased.

Accordingly, generation of cracks in the particles during a press process of electrodes may be suppressed, and thereby preventing generation of gas due to side reactions with the electrolyte and structural instability due to breakage of the particles. Therefore, the lithium secondary battery may provide uniform output and capacity regardless of repeated charging/discharging, as well as improve the life-span characteristics thereof.

For example, the lithium-transition metal composite oxide particle includes a composition of high-nickel (high-Ni) contents, provide increased output and capacity, and have the above-described crystal grain size, such that improved operational stability and lifespan characteristics can be provided.

[BRIEF DESCRIPTION OF THE DRAWINGS]

The above and other objects, features and other advantages of the present invention will be more clearly understood from the following detailed description taken in conjunction with the accompanying drawings, in which:

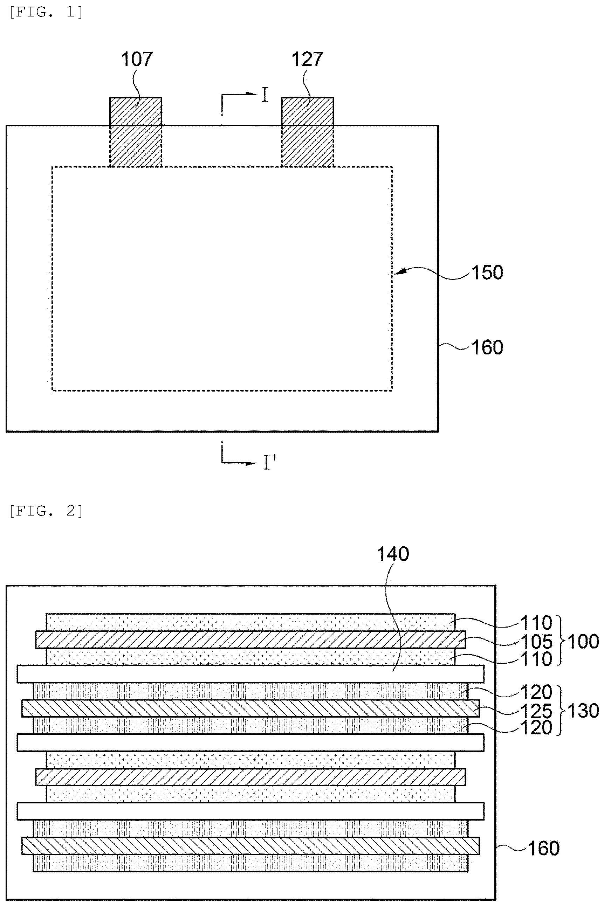

FIGS. 1 and 2 are a schematic plan and a cross-sectional view illustrating a lithium secondary battery according to exemplary embodiments, respectively.

[DETAILED DESCRIPTION OF THE INVENTION]

Embodiments of the present invention provide a lithium secondary battery including a lithium-transition metal composite oxide particle having a predetermined crystal grain size as a cathode active material.

Hereinafter, exemplary embodiments of the present invention will be described in detail with reference to the accompanying drawings. However, these embodiments are merely an example, and the present invention is not limited to the specific embodiments described as the example.

Referring to FIGS. 1 and 2, a lithium secondary battery according to exemplary embodiments may include an electrode assembly including a cathode 100, an anode 130, and a separation membrane 140 interposed between the cathode 130 and the anode 140. The electrode assembly may be housed in a case 160 together with an electrolyte to be impregnated.

The cathode 100 may include a cathode active material layer 110 formed by applying a cathode active material to a cathode current collector 105. The cathode active material may include a compound capable of reversibly intercalating and deintercalating lithium ions.

In exemplary embodiments, the cathode active material may include a lithium-transition metal composite oxide particle. For example, the lithium-transition metal composite oxide particle includes nickel (Ni), and may further include at least one of cobalt (Co) and manganese (Mn).

For example, the lithium-transition metal composite oxide particle may be represented by Formula 1 below.

[Formula 1]    $Li_xNi_{1-y}M_yO_{2+z}$

In Formula 1, x and y may be in a range of $0.9 \leq x \leq 1.1$, and $0 \leq y \leq 0.7$, and z may be in a range of $-0.1 \leq z \leq 0.1$. M may be at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr.

In some embodiments, a molar ratio or concentration (1-y) of Ni in Formula 1 may be 0.8 or more, and exceeds 0.8 in a preferred embodiment.

Ni may be provided as a transition metal associated with the output and capacity of the lithium secondary battery. Therefore, as described above, by employing the composition of high-nickel (high-Ni) contents in the lithium-transition metal composite oxide particle, a high-power cathode and a high-power lithium secondary battery can be provided.

However, as the content of Ni is increased, long-term storage stability and life-span stability of the cathode or secondary battery may be relatively deteriorated. However, according to exemplary embodiments, by including Co, the life-span stability and capacity retention characteristics may be improved through Mn while maintaining electrical conductivity.

In some embodiments, the cathode active material or the lithium-transition metal composite oxide particle may further include a coating element or doping element. For example, the coating element or doping element may include Al, Ti, Ba, Zr, Si, B, Mg, P, or an alloy thereof or an oxide thereof. These may be used alone or in combination of two or more thereof. The cathode active material particles are passivated by the coating element or doping element, thereby stability and lifespan for penetration of an external object may be more improved.

According to exemplary embodiments, the lithium-transition metal composite oxide particle may have a crystal grain size of greater than 500 nm.

When the content of Ni in the particles is increased, mechanical strength and chemical stability of the cathode active material are deteriorated, and thus, crack of the particles may be generated during a press process for forming the cathode active material layer 110, for example. Thereby, the electrolyte may penetrate into the particles to cause a generation of gas due to side reactions.

In addition, according to the repetition of charging and discharging, a volume of the cathode active material is repeatedly contracted/expanded, and thereby, in the case of cathode active material containing high-Ni contents, crack of the particles may be more intensified.

However, according to exemplary embodiments, by employing the lithium-transition metal composite oxide particle having a crystal grain size of greater than 500 nm, a strength of the particles may be increased, and boundary regions between crystal grains or particles may be decreased, thus to reduce the crack of the particles.

Therefore, the generation of gas due to the repeated charging/discharging may be suppressed, and cracking due to contraction/expansion of the volume may be reduced. Thus, stable capacity characteristics even in a high temperature environment can be provided and life-span characteristics of the lithium secondary battery can be improved.

In exemplary embodiments, the "crystal grain size" is a value obtained by measuring the particles through X-ray diffraction (XRD) analysis. The crystal grain size may be calculated and obtained through the Scherrer equation (Equation 1 below) using a full width at half maximum (FWHM) obtained through the XRD analysis.

[Equation 1]

$$L = \frac{0.9\lambda}{\beta cos\theta}$$

In Equation 1 above, L represents the crystal grain size, $\lambda$ represents an X-ray wavelength, $\beta$ represents the FWHM of a peak, and $\theta$ represents an angle of diffraction. According to exemplary embodiments, the FWHM in the XRD analysis for measuring the crystal grain size may be measured from the peak of (003) plane.

In exemplary embodiments, the XRD analysis is performed using Cu-Ka rays as a diffraction light source for the dried powder of the lithium-transition metal composite oxide particle in an angle of diffraction ($2\theta$) range of 10° to 120 ° at a scan rate of 0.0065°/s.

According to some embodiments, in Equation 1 above, $\beta$ may use a FWHM obtained by correcting a value derived from an equipment. In an embodiment, Si may be used as a standard material for reflecting the equipment-derived value. In this case, a value obtained by subtracting and correcting the FWHM of the peak of (220) plane of Si may be used as $\beta$.

In some embodiments, the crystal grain size may be 600 nm or more. In this case, crack stability of the lithium-transition metal composite oxide particle may be more increased.

In an embodiment, the crystal grain size may not exceed 1200 nm, and preferably, may be 600 to 1100 nm. In the above range, thermal stability and life-span characteristics can be effectively maintained while high output and high capacity through the composition of high-Ni contents can be sufficiently implemented.

For example, the lithium-transition metal composite oxide particle may be manufactured by wet or dry-mixing a nickel-manganese-cobalt precursor (e.g., nickel-cobalt-manganese hydroxide) with a lithium precursor (e.g., lithium hydroxide or lithium carbonate) and performing a reaction, followed by performing calcination treatment on the reactant.

In an embodiment, the crystal grain size of the lithium-transition metal composite oxide particle may be controlled by adjusting a calcination treatment temperature.

The lithium-transition metal composite oxide particle may have a single crystal structure and/or polycrystalline structure in crystallography. In an embodiment, the cathode active material may include a mixture or blend of single crystal particles and polycrystalline particles having the above-described crystal grain size.

The lithium-transition metal composite oxide particle may have a form of single particles or primary particles in morphology.

In some embodiments, the cathode active material may further include an active material particle in a form of a secondary particle in morphology together with the lithium-transition metal composite oxide particle having the above-described crystal grain size.

For example, the cathode active material may further include, for example, a second lithium-transition metal composite oxide particle having a composition of Formula 1 and having a secondary particle structure, together with a first lithium-transition metal composite oxide particle having a single crystal or polycrystalline particle structure in a form of a single particle and having a crystal grain size of greater than 500 nm.

In an embodiment, the second lithium-transition metal composite oxide particle may have a crystal grain size of 500 nm or less, for example, 300 nm or less.

In an embodiment, the second lithium-transition metal composite oxide particle may include a concentration gradient region between a core part of the particle and a surface of the particle. In this case, for example, the concentration or molar ratio of Ni may be decreased toward the surface of the particle from the core part of the particle in the concentration gradient region. In this case, the concentration of Mn may be decreased toward the surface of the particle from the core part of the particle in the concentration gradient region, for example.

When the first lithium-transition metal composite oxide particle and the second lithium-transition metal composite oxide particle are used together, a mixing weight ratio (the first lithium-transition metal composite oxide particle : the second lithium-transition metal composite oxide particle) may be 1:9 to 9:1.

In a preferred embodiment, the mixing weight ratio may be adjusted in a range of 3:7 to 7:3 in order to secure sufficient thermal and structural stabilities and life-span characteristics through the above-described crystal grain size.

As described above, even when using a lithium-transition metal composite oxide particle in a form of a high-Ni secondary particle having a relatively small crystal grain size, thermal stability of the cathode active material may be increased as a whole by employing the first lithium-transition metal composite oxide particle, and stable life-span characteristics may be provided.

In an embodiment, the lithium-transition metal composite oxide particle may have a particle diameter ($D_{50}$) of about 1 to 20 $\mu$m. When using the first lithium-transition metal composite oxide particle and the second lithium-transition metal composite oxide particle together, the particle diameter of the second lithium-transition metal composite oxide particle may be larger than the particle diameter of the first lithium-transition metal composite oxide particle.

For example, the particle diameter of the first lithium-transition metal composite oxide particle may be about 1 to 10 $\mu$m. The particle diameter of the second lithium-transition metal composite oxide particle may be about 11 to 20 $\mu$m, and preferably about 11 to 16 $\mu$m.

In an embodiment, the lithium-transition metal composite oxide particle may have a specific surface area (BET) of about 0.1 to 1 $m^2$/g.

A slurry may be prepared by mixing the cathode active material including the above-described lithium-transition metal composite oxide particle in a solvent with a binder, a conductive material, and/or a dispersion material, followed by stirring the same. The slurry may be coated on the cathode current collector 105, followed by compressing and drying to manufacture the cathode 100.

The cathode current collector 105 may include, for example, stainless steel, nickel, aluminum, titanium, copper, or an alloy thereof, and preferably includes aluminum or an aluminum alloy.

The binder may include, for example, an organic binder such as vinylidene fluoride-hexafluoropropylene copolymer (PVDF-co-HFP), polyvinylidene fluoride (PVDF), polyacrylonitrile, polymethyl methacrylate, etc., or an aqueous binder such as styrene-butadiene rubber (SBR), and may be used together with a thickener such as carboxymethyl cellulose (CMC).

For example, a PVDF-based binder may be used as the cathode binder. In this case, an amount of the binder for forming the cathode active material layer may be reduced and an amount of the cathode active material may be relatively increased, thereby improving the output and capacity of the secondary battery.

The conductive material may be included to facilitate electron transfer between the active material particles. For example, the conductive material may include a carbon-based conductive material such as graphite, carbon black, graphene, or carbon nanotubes and/or a metal-based conductive material such as tin, tin oxide, titanium oxide, or a perovskite material such as $LaSrCoO_3$, and $LaSrMnO_3$, etc.

The anode 130 may include an anode current collector 125, and an anode active material layer 120 formed by coating an anode active material on the anode current collector 125.

The anode active material useable in the present invention may include any material known in the related art, so long as it can absorb and desorb lithium ions, without particular limitation thereof. For example, carbon-based materials such as crystalline carbon, amorphous carbon, carbon composite, carbon fiber, etc.; a lithium alloy; a silicon compound or tin may be used. Examples of the amorphous carbon may include hard carbon, cokes, mesocarbon microbead (MCMB), mesophase pitch-based carbon fiber (MPCF) or the like.

Examples of the crystalline carbon may include graphite-based carbon such as natural graphite, artificial graphite, graphite cokes, graphite MCMB, graphite MPCF or the like. Other elements included in the lithium alloy may include, for example, aluminum, zinc, bismuth, cadmium, antimony, silicone, lead, tin, gallium, indium or the like.

The silicon compound may include, for example, a silicon-carbon composite compound such as silicon oxide or silicon carbide (SiC).

For example, a form of slurry may be prepared by mixing the anode active material with a binder, a conductive material and/or thickener in a solvent, followed by stirring the same. The slurry may be coated on at least one surface of the anode current collector 125, followed by compressing and drying to manufacture the anode 130.

As the binder and the conductive material, materials which are substantially the same as or similar to the above-described materials used in the cathode active material layer 110 may be used. In some embodiments, the binder for forming the anode may include, for example, an aqueous binder such as styrene-butadiene rubber (SBR) for consistency with the carbon-based active material, and may be used together with a thickener such as carboxymethyl cellulose (CMC).

A separation membrane 140 may be interposed between the cathode 100 and the anode 130. The separation membrane 140 may include a porous polymer film made of a polyolefin polymer such as ethylene homopolymer, propylene homopolymer, ethylene/butene copolymer, ethylene/hexene copolymer, ethylene/methacrylate copolymer. The separation membrane 140 may include a nonwoven fabric made of glass fiber having a high melting point, polyethylene terephthalate fiber or the like.

In some embodiments, the anode 130 may have an area (e.g., a contact area with the separation membrane 140) and/or volume larger than those/that of the cathode 100. Thereby, lithium ions generated from the cathode 100 may smoothly move to the anode 130 without being precipitated in the middle, for example.

According to exemplary embodiments, an electrode cell is defined by the cathode 100, the anode 130, and the separation membrane 140, and a plurality of electrode cells are stacked to form, for example, a jelly roll type electrode assembly 150. For example, the electrode assembly 150 may be formed by winding, laminating, folding, or the like of the separation membrane 140.

The electrode assembly 150 may be housed in the case 160 together with an electrolyte to define the lithium secondary battery. According to exemplary embodiments, a non-aqueous electrolyte may be used as the electrolyte.

The non-aqueous electrolyte includes a lithium salt of an electrolyte and an organic solvent, and the lithium salt is represented by, for example, $Li^+X^-$, and as an anion (X-) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulforane, $\gamma$-butyrolactone, propylene sulfite, tetrahydrofurane, and the like may be used. These compounds may be used alone or in combination of two or more thereof.

As shown in FIG. 1, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) extending or exposed to an outside of the case 160.

The lithium secondary battery may be manufactured, for example, in a cylindrical shape using a can, a square shape, a pouch type or a coin shape.

Hereinafter, specific experimental examples are proposed to facilitate understanding of the present invention. However, the following examples are only given for illustrating the present invention and those skilled in the art will obviously understand that various alterations and modifications are possible within the scope and spirit of the present invention. Such alterations and modifications are duly included in the appended claims.

**Preparation of the first lithium-transition metal composite oxide particle**

$Ni_{0.82}Co_{0.13}Mn_{0.10}(OH)_2$ as an NCM precursor and LiOH as a lithium source were mixed for about 20 minutes while grinding. The mixed powder was calcined at a predetermined temperature for 15 hours, and then grinding, sieving, and iron removal processes were performed to prepare the first lithium-transition metal composite oxide particle in a form of a single particle (including a single crystal and polycrystalline structure) having a whole composition formula of $LiNi_{0.82}Co_{0.13}Mn_{0.10}O_2$. Crystal grain sizes of the particles measured using Equation 1 described above were controlled by means of XRD analysis through temperature control in the calcination process.

Specific XRD analysis equipment/conditions are as described in Table 1 below.

[TABLE 1]

| XRD (X-Ray Diffractometer) EMPYREAN | |
|---|---|
| Maker | PANalytical |
| Anode material | Cu |
| K-Alpha1 wavelength | 1.540598 Å |
| Generator voltage | 45 kV |
| Tube current | 40 mA |
| Scan Range | 10 - 120° |
| Scan Step Size | 0.0065° |
| Divergence slit | 1/4° |
| Antiscatter slit | 1/2° |

**Preparation of the second lithium-transition metal composite oxide particle**

A precipitate was prepared by mixing a nickel precursor ($NiSO_4$), a manganese precursor ($MnSO_4$), and a cobalt precursor ($CoSO_4$) while continuously changing a mixing ratio thereof, so that a whole composition is $LiNi_{0.8}0Co_{0.11}Mn_{0.09}O_2$, a core part composition of the particle is $LiNi_{0.802}Co_{0.11}Mn_{0.088}O_2$, a surface composition of the particle is $LiNi_{0.77}Co_{0.11}Mn_{0.12}O_2$, and a concentration gradient region is formed between the core part of the particle and the surface of the particle. The precipitate and LiOH as a lithium source were mixed together, followed by performing a reaction and calcination to prepare the second lithium-transition metal composite oxide particles ($D_{50}$: 12.9 $\mu$m) having a secondary particle structure having a crystal grain size of 100 nm.

**Manufacturing of lithium secondary battery**

Secondary batteries were manufactured using the lithium-transition metal composite oxide particle of the examples and comparative examples described in Table 2 as a cathode active material. Specifically, the cathode active materials, Denka Black as a conductive material and PVDF as a binder were mixed in a mass ratio composition of 97:2:1, respectively, to prepare a cathode slurry. Then, the slurry was applied to an aluminum current collector, and a cathode was prepared through drying and pressing. After the pressing, the cathode was controlled so as to have an electrode density of 3.55 g/cc or more.

An anode slurry, which includes 93 wt.% of natural graphite as an anode active material, 5 wt.% of KS6 as a flake type conductive material, 1 wt.% of styrene-butadiene rubber (SBR) as a binder, and 1 wt.% of carboxymethyl cellulose (CMC) as a thickener, was prepared. The anode slurry was applied to a copper substrate, followed by drying and pressing to prepare an anode.

The cathodes and the anodes prepared as described above were respectively notched in a predetermined size and stacked, then an electrode cell was fabricated between the cathode and the anode with a separator (polyethylene, thickness: 25 $\mu$m) interposed therebetween. Thereafter, tap parts of the cathode and the anode were welded, respectively. A combination of the welded cathode/separator/anode was put into a pouch, followed by sealing three sides of the pouch except for one side into which an electrolyte is injected. At this time, a portion having the electrode tab was included in the sealing part. After injecting the electrolytic through the remaining one side except for the sealing part, the remaining one side was also sealed, followed by impregnation for 12 hours or more.

The electrolyte used herein was prepared by dissolving 1M $LiPF_6$ solution in a mixed solvent of EC/EMC/DEC (25/45/30; volume ratio), and adding 1wt.% of vinylene carbonate (VC), 0.5 wt.% of 1,3-propene sultone (PRS), and 0.5 wt.% of lithium bis(oxalato)borate (LiBOB) thereto.

After then, pre-charging was conducted on the secondary battery prepared as described above with a current (5A) corresponding to 0.25C for 36 minutes. After 1 hour, degassing then aging for 24 hours or more were conducted, followed by chemical charging-discharging (charge condition: CC-CV 0.2C 4.2 V 0.05C CUT-OFF; discharge condition: CC 0.2C 2.5 V CUT-OFF).

Designs of the cathode active materials of the lithium secondary batteries prepared as described above and electrode densities measured at the cathode are shown in Table 2 below.

[TABLE 2]

| Section | Cathode active material | Electrode density (Cathode active material layer) (g/cc) |
|---|---|---|
| Example 1 | The first lithium-transition metal composite oxide particle (Crystal grain size 1000 nm, $D_{50}$: 6.8 $\mu$m) used alone | 3.59 |
| Example 2 | | 3.74 |
| Example 3 | | 3.86 |
| Example 4 | The first lithium-transition metal composite oxide particle (30 wt.%) (Crystal grain size 1000 nm, $D_{50}$: 6.8 $\mu$m) + The second lithium-transition metal composite oxide particle (70 wt.%) | 3.55 |
| Example 5 | | 3.69 |
| Example 6 | | 3.8 |
| Example 7 | The first lithium-transition metal composite oxide particle (30 wt.%) (Crystal grain size 671 nm, $D_{50}$: 3.57 $\mu$m) + The second lithium-transition metal composite oxide particle (70 wt.%) | 3.57 |
| Example 8 | | 3.74 |
| Example 9 | | 3.85 |
| Example 10 | The first lithium-transition metal composite oxide particle (30 wt.%) (Crystal grain size 839 nm, $D_{50}$: 3.5 $\mu$m) + The second lithium-transition metal composite oxide particle (70 wt.%) | 3.54 |
| Example 11 | | 3.72 |
| Example 12 | | 3.78 |
| Example 13 | The first lithium-transition metal composite oxide particle (Crystal grain size 1100 nm, $D_{50}$: 5.7 $\mu$m) used alone | 3.64 |
| Example 14 | The first lithium-transition metal composite oxide particle (Crystal grain size 1200 nm, $D_{50}$: 6.5 $\mu$m) used alone | 3.72 |
| Comparative Example 1 | The second lithium-transition metal composite oxide particle used alone | 3.54 |
| Comparative Example 2 | | 3.66 |
| Comparative Example 3 | | 3.73 |

**Experimental examples**

(1) Measurement of hot gas generation

After charging (1C 4.2 V 0.1C CUT-OFF) the lithium secondary batteries of examples and comparative examples having the cathode compositions of Table 2, amounts of gas generated after 1 week and 4 weeks after storage in a thermostatic chamber of 60°C were confirmed through gas chromatography (GC) analysis. In order to measure a total amount of gas generated, a hole was formed in the chamber under a vacuum of a predetermined volume (V), and a pressure change was measured to calculate a volume of gas generated.

(2) Measurement of amount of gas generated after repeated charging and discharging

Amounts of gas generated from the lithium secondary batteries of the examples and the comparative examples were measured after repeatedly charging (CC-CV 1.0C 4.2 V 0.05C CUT-OFF) and discharging (CC 1.0C 2.7 V CUT-OFF) 100 times and 300 times in a thermostatic chamber of 45°C through GC analysis.

Evaluation results are shown in Table 3 below.

[TABLE 3]

| Section | Amount of gas generated at high temperature (mL) | | Amount of gas generated after repeated charging and discharging (mL) | |
|---|---|---|---|---|
| | After 1 week | After 4 weeks | After 100 cycles | After 300 cycles |
| Example 1 | 5.1 | 2.0 | 1.0 | 10.3 |
| Example 2 | 8.9 | 5.1 | 4.0 | 9.2 |
| Example 3 | 9.2 | 6.0 | 6.2 | 10.1 |
| Example 4 | 13.2 | 21.5 | 5.7 | 18.4 |
| Example 5 | 15.3 | 23.9 | 3.0 | 18.8 |
| Example 6 | 21.5 | 32.5 | 11.3 | 32.7 |
| Example 7 | 12.0 | 22.7 | 0.4 | 14.9 |
| Example 8 | 1.7 | 18.3 | 8.3 | 17.8 |
| Example 9 | 17.2 | 25.6 | 5.5 | 28.3 |
| Example 10 | 1.5 | 25.4 | 3.2 | 30.6 |
| Example 11 | 28.3 | 46.9 | 11.3 | 34.6 |
| Example 12 | 27.1 | 47.6 | 14.2 | 28.7 |
| Example 13 | 5.0 | 1.8 | 0.9 | 9.0 |
| Example 14 | 5.1 | 1.9 | 0.9 | 8.8 |
| Comparative Example 1 | 22.2 | 29.4 | 11.2 | 44.2 |
| Comparative Example 2 | 35.0 | 58.7 | 37.3 | 63.5 |
| Comparative Example 3 | 41.2 | 72.4 | 40.4 | 82.1 |

Referring to Table 3, in the case of the examples including the first lithium-transition metal composite oxide particle having a crystal grain size of greater than 500 nm, the amount of gas generated at high temperature and the amount of gas generated after repeated charging and discharging were reduced compared to the comparative examples.

Additionally, discharge capacities of the lithium secondary batteries of Examples 1, 13, and 14 were measured after charging (CC/CV 0.5C 4.3 V 0.05CA CUT-OFF) and discharging (CC 1.0C 3.0 V CUT-OFF).

In the lithium secondary batteries of Examples 1, 13, and 14, discharge capacities of 205 mAh/g, 188 mAh/g, and 167 mAh/g were obtained, respectively, and for example, it was confirmed that an initial discharge capacity was slightly deteriorated while the crystal grain size exceeded 1100 nm.

[Description of Reference Numerals]

100:    Cathode
105:    Cathode current collector
110:    Cathode active material layer
120:    Anode active material layer
125:    Anode current collector
130:    Anode
140:    Separation membrane
160:    Case

**Claims**

1. A cathode active material for a lithium secondary battery comprising:
a lithium-transition metal composite oxide particle having a crystal grain size of greater than 500 nm measured through X-ray diffraction (XRD) analysis.

2. The cathode active material for a lithium secondary battery according to claim 1, wherein the crystal grain size is measured through Equation 1 below:

[Equation 1]

$$L = \frac{0.9\lambda}{\beta cos\theta}$$

(In Equation 1, L represents the crystal grain size, $\lambda$ represents an X-ray wavelength, $\beta$ represents a full width at half maximum (FWHM) of a peak of (003) plane, and $\theta$ represents an angle of diffraction).

3. The cathode active material for a lithium secondary battery according to claim 1, wherein the lithium-transition metal composite oxide particle has a crystal grain size of 600 to 1100 nm.

4. The cathode active material for a lithium secondary battery according to claim 1, wherein the lithium-transition metal composite oxide particle comprises a first lithium-transition metal composite oxide particle having a crystal grain size of greater than 500 nm measured through the XRD analysis and a second lithium-transition metal composite oxide particle in a form of a secondary particle.

5. The cathode active material for a lithium secondary battery according to claim 4, wherein the first lithium-transition metal composite oxide particle includes a form of a single particle having single crystal or polycrystalline structure in crystallography.

6. The cathode active material for a lithium secondary battery according to claim 4, wherein the crystal grain size of the second lithium-transition metal composite oxide particle measured through the XRD analysis is 500 nm or less.

7. The cathode active material for a lithium secondary battery according to claim 4, wherein a weight ratio of the first lithium-transition metal composite oxide particle and the second lithium-transition metal composite oxide particle is 3:7 to 7:3 in the cathode active material.

8. The cathode active material for a lithium secondary battery according to claim 4, wherein a particle diameter ($D_{50}$) of the second lithium-transition metal composite oxide particle is larger than a particle diameter of the first lithium-transition metal composite oxide particle.

9. The cathode active material for a lithium secondary battery according to claim 1, wherein the lithium-transition metal composite oxide particle has a composition represented by the following formula (1):

[Formula 1]   $Li_xNi_{1-y}M_yO_{2+z}$

(In Formula 1, x and y are in a range of $0.9 \leq x \leq 1.1$, and $0 \leq y \leq 0.7$, z is in a range of $-0.1 \leq z \leq 0.1$, and M is at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn and Zr).

10. The cathode active material for a lithium secondary battery according to claim 9, wherein a molar ratio of Ni in the Formula 1 is 0.8 or more.

11. A lithium secondary battery comprising:

a cathode including the cathode active material for a lithium secondary battery according to claim 1; and
an anode disposed to face the cathode.

[FIG. 1]

[FIG. 2]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• KR 1020170093085